# EUROPÄISCHE PATENTSCHRIFT

(11) **EP 3 636 210 B1**
(45) Veröffentlichungstag und Bekanntmachung des Hinweises auf die Patenterteilung: **14.04.2021**
(21) Anmeldenummer: 19212688.6
(22) Anmeldetag: 08.02.2019
(51) Int. Cl.: A61C 8/00

(54) **SUPRAKONSTRUKTION**
SUPERSTRUCTURE
SUPRACONSTRUCTION

(30) Priorität: 04.06.2018 DE 102018113237
(43) Veröffentlichungstag der Anmeldung: 15.04.2020
(62) Teilanmeldung aus: 19706413.2
(73) Patentinhaber: TRI Dental Implants Int. AG, 6331 Hünenberg (CH)
(72) Erfinder: Venanzoni, Sandro, 8051 Zürich (CH); Perez, Rafael, 79106 Freiburg (DE); Jung, Ronald, 8700 Küsnacht (CH); Richter, Tobias, 8700 Küsnacht (CH)
(74) Vertreter: Witte, Weller & Partner Patentanwälte mbB

(56) Entgegenhaltungen:
- EP-A1- 0 868 889
- WO-A1-2016/144127
- KR-A- 20060 025 770

## Beschreibung

Die vorliegende Erfindung betrifft eine Suprakonstruktion gemäß dem Oberbegriff des Anspruchs 1 als Gegenstück zu einem Zahnimplantat und zur Verwendung in einer Zahnprothese.

Eine Suprakonstruktion gemäß dem Oberbegriff des Anspruchs 1 ist aus der WO 2016/144127 A1 bekannt. Weitere Suprakonstruktionen sind aus der EP 0 868 889 A1 und der KR 2006 0025770 A bekannt.

Der Begriff "Zahnimplantat" wird umgangssprachlich häufig uneinheitlich und oft fälschlicherweise für das Gesamtgebilde einer Zahnprothese verwendet. Daher sei an dieser Stelle klargestellt, dass unter einem "Zahnimplantat" im medizinischen und vorliegenden Sinne nur der Implantatkörper verstanden wird, also die künstliche Zahnwurzel, die im Kiefer des Patienten implantiert wird. Häufig wird anstelle des Begriffs "Zahnimplantat" daher auch der Begriff "Implantatkörper" verwendet. Im Weiteren wird jedoch einheitlich der Begriff "Zahnimplantat" für den genannten Teil der Zahnprothese verwendet.

Herkömmliche Zahnprothesen dieser Art weisen zusätzlich zu dem Zahnimplantat ein sogenanntes Abutment auf, welches als Verbindungsteil zwischen dem Zahnimplantat und der Implantatkrone (Suprakonstruktion) fungiert. Das Abutment bildet den sensiblen Übergang durch das periimplantäre Weichgewebe zur Mundhöhle und zur Suprakonstruktion. Derartige Abutments werden teilweise auch als "Stützpfeiler" oder als "Implantatpfosten" bezeichnet. Üblicherweise sind Abutments aus Titan, Keramik oder Keramikverbundstoffen wie Aluminiumoxid- oder Zirkondioxidkeramik.

Die Suprakonstruktion, also die künstliche Zahnkrone, ist typischerweise aus Keramik oder einem vergleichbaren Werkstoff. Traditionell wird die Suprakonstruktion von einem Zahntechniker wie folgt hergestellt: Zunächst wird ein Wachsmodell für die künstliche Zahnkrone erzeugt. Dann wird anhand des Wachsmodells die künstliche Zahnkrone gegossen. Das Abutment wird manuell auf die richtige Größe und Form abgeschliffen, um im letzten Schritt die gegossene, künstliche Zahnkrone auf das Abutment zu montieren. Meist erfolgt die Montage durch Verkleben der Suprakonstruktion mit dem Abutment. Durch diesen größtenteils manuell durchgeführten Prozess lassen sich hochpräzise Ergebnisse erzielen. Es versteht sich jedoch, dass das zeitaufwändig und damit auch kostenintensiv ist. Zudem ergibt sich eine Klebefuge zwischen der Suprakonstruktion und dem Abutment, welche anfällig für Undichtigkeiten ist und zudem die Langlebigkeit der Zahnprothese einschränken kann.

Heutzutage gibt es vielerlei Bestrebungen, den o.g. Prozess weitest möglich zu digitalisieren bzw. zu automatisieren. Die Suprakonstruktion wird mittlerweile häufig anhand eines 3D-Modells auf einer Fräsmaschine gefräst. Bei dieser Art der Herstellung wird direkt die Anschlussgeometrie für den Anschluss bzw. die Verbindung mit dem Abutment in die Suprakonstruktion auf deren Hinterseite eingebracht. Die Form und Größe des Abutments muss daher bereits bei der Herstellung der künstlichen Zahnkrone bekannt sein, um die Fräsmaschine entsprechend programmieren zu können. Dies wird meist anhand eines CAD-Modells des Abutments gemacht, welches in die Steuerung der Fräsmaschine eingelesen wird.

Da die Form und Größe des Abutments bereits vor der Herstellung der Suprakonstruktion bekannt sein muss, wählen viele Hersteller ein kurzes und kleines Abutment, das für jede Anatomie passt. Bei länglichen, also vergleichsweise langen Suprakonstruktionen ist ein kurzes und kleines Abutment im Verhältnis zu der Suprakonstruktion allerdings biomechanisch unpassend, so dass es zu Lockerungen oder Brüchen kommen kann.

Andere Hersteller lösen dies durch viele unterschiedliche Abutments. Je nach Form und Größe der Suprakonstruktion werden dann unterschiedlich große bzw. unterschiedlich geformte Abutments verwendet. So muss für einen künstlichen Schneidezahn beispielsweise ein anderes Abutment verwendet werden als für einen künstlichen Backenzahn. Ist bei der Verwendung für einen künstlichen Schneidezahn beispielsweise die hintere Flanke des Abutments nicht abgeschrägt, so wäre das Abutment auf der Hinterseite der Suprakonstruktion sichtbar, was schon aus rein ästhetischen Gesichtspunkten unerwünscht ist. Dieses Problem ergibt sich bei der Verwendung für einen künstlichen Backenzahn dagegen möglicherweise nicht.

Bei der automatisierten Herstellung mit digitalen CAD-Modellen werden für den Hersteller der Suprakonstruktion üblicherweise mehrere CAD-Datensätze bereitgestellt, welche die unterschiedliche Formen der Abutments abbilden. Gleichzeitig muss der Hersteller der Suprakonstruktion eine Vielzahl von Abutments unterschiedlicher Formen und Größen auf Lager halten. Dies gestaltet sich vielfach als umständlich und erzeugt darüber hinaus hohe Lagerkosten.

Die Nachteile der bisherigen Herangehensweisen lassen sich also wie folgt zusammenfassen: Zum einen schränkt die Verwendung von Abutments die Form- und Gestaltungsfreiheit der Suprakonstruktion inklusive deren transgingivalen Anteils ein. Ein nicht flexibler transgingivaler Anteil der Suprakonstruktion kann vor allem Probleme beim Weichgewebsmanagement hervorrufen. Ein ideales Weichgewebsmanagement ist allerdings entscheidend für ein ästhetisches Ergebnis und ein langfristig stabiles Knochenniveau. Zum anderen sind die Material- und Herstellungskosten für eine solche Zahnprothese gemäß dem Stand der Technik relativ hoch. Darüber hinaus ergibt sich eine in vielerlei Hinsicht nachteilhafte Klebefuge zwischen der Suprakonstruktion und dem Abutment.

Vor diesem Hintergrund wäre es daher wünschenswert, einen neuen Ansatz zu wählen, bei dem eine Zahnprothese der o.g. Art auch ohne Abutment auskommt, wobei also die Suprakonstruktion direkt mit dem Zahnimplantat zum Beispiel durch Verschrauben verbunden wird. Bei einem solchen Ansatz stellen sich jedoch besondere technische Anforderungen an das Zahnimplantat und dessen Konstruktion.

Es ist daher eine Aufgabe der vorliegenden Erfindung, eine Suprakonstruktion bereitzustellen, welche ohne die Verwendung eines Abutments eine direkte Verbindung mit dem Zahnimplantat ermöglicht.

Diese Aufgabe wird durch eine Suprakonstruktion gemäß Anspruch 1 gelöst.
Weiters wird ein Zahnimplantat beschrieben, welches nicht Teil der beanspruchten Erfindung ist und welches ein auf einer Außenseite des Zahnimplantats angeordnetes Außengewinde zur Befestigung des Zahnimplantats an einem Kieferknochen, eine sich entlang einer Längsachse des Zahnimplantats erstreckende Öffnung, in der ein Innengewinde zur Befestigung einer Suprakonstruktion an dem Zahnimplantat angeordnet ist, und eine Schnittstelle zur Befestigung der Suprakonstruktion an dem Zahnimplantat, welche an einem stirnseitigen Ende des Zahnimplantats angeordnet ist, aufweist. Die Schnittstelle weist eine sich über einen Winkelbereich von mindestens 90° um die Längsachse herum erstreckende konvexe, abgerundete Wölbung und eine im Vergleich zu der Wölbung radial weiter außen angeordnete Auflagefläche auf, wobei die Auflagefläche zumindest einen kreisringförmigen Abschnitt hat, der quer zu der Längsachse ausgerichtet ist. Eine Tangente an einen radial äußeren Rand der Wölbung, welcher dem kreisringförmigen Abschnitt der Auflagefläche zugewandt ist, ist parallel oder in einem Winkel größer 60° zu dem kreisringförmigen Abschnitt der Auflagefläche ausgerichtet.

Die Schnittstelle des Zahnimplantats ermöglicht eine Befestigung der Suprakonstruktion unmittelbar und direkt an dem Zahnimplantat, ohne die Verwendung eines Abutments. Aufgrund der speziellen Ausgestaltung der Schnittstelle lässt sich die Suprakonstruktion eindeutig definiert an der Schnittstelle anordnen. Dies ermöglicht eine eindeutig definierte Relativposition zwischen Suprakonstruktion und Zahnimplantat.

Ein Merkmal der Schnittstelle ist die daran angeordnete konvex abgerundete Wölbung, welche sich zumindest über einen Winkelbereich von 90° um die Längsachse herum erstreckt. Diese Wölbung dient der Befestigung der Suprakonstruktion an dem Zahnimplantat. Sie nimmt Kräfte in Radialrichtung, also orthogonal zur Längsachse, auf. Zudem dient die Wölbung als Zentrierung.

Unter einer "konvexen" Wölbung wird vorliegend jede nach außen gewölbte Wölbung verstanden. Eine konvexe Wölbung bildet das Gegenteil zu einer konkaven, nach innen gewölbten Mulde. Lediglich zur Klarstellung wird die konvexe Wölbung vorliegend teilweise zusätzlich auch als abgerundet definiert, wenngleich der Begriff "konvex" eine solche Rundung bzw. Abrundung bereits impliziert. Die vorliegend als konvex und abgerundet definierte Wölbung weist vorzugsweise eine stetige Tangentensteigung (ohne "Knick") auf.

Des Weiteren weist die Schnittstelle des Zahnimplantats eine Auflagefläche auf, wobei zumindest ein Teil bzw. Abschnitt dieser Auflagefläche kreisringförmig ist und quer zu der Längsachse des Zahnimplantats ausgerichtet ist. Dieser kreisringförmige Abschnitt der Auflagefläche umgibt die konvexe Wölbung, er ist also radial weiter außen angeordnet als diese. Unter "quer" wird vorliegend jede Art der Ausrichtung verstanden, welche nicht parallel ist. "Quer" kann, muss jedoch nicht zwangsläufig orthogonal sein. Vorzugsweise hat die kreisringförmige Auflagefläche rund herum einen konstanten Winkel in Bezug auf die Längsachse des Zahnimplantats. Vorzugsweise ist dieser Winkel größer als 60°, besonders bevorzugt ist dieser Winkel ein rechter Winkel (90°).

Der kreisringförmige Abschnitt der Auflagefläche dient der Aufnahme von Axialkräften parallel zur Längsachse. Hierdurch werden Zugspannungen vermieden, welche zum Bruch der Suprakonstruktion führen könnten. Des Weiteren dient der kreisringförmige Abschnitt der Auflagefläche als Grenz- bzw. Dichtfläche, um entlang des Umfangs Zwischenräume zwischen der Suprakonstruktion und dem Zahnimplantat zu vermeiden, durch die Verunreinigungen eintreten könnten. Der kreisringförmige Abschnitt der Auflagefläche bildet daher vorzugsweise den radial äußersten Bereich der Schnittstelle, welcher alle übrigen Bereiche der Schnittstelle inklusive der Wölbung umgibt.

Eine Tangente an dem in Bezug auf die Radialrichtung äußeren Rand der konvexen Wölbung ist entweder parallel oder in einem Winkel größer 60° zu dem kreisringförmigen Abschnitt ausgerichtet. Da der kreisringförmige Abschnitt vorzugsweise orthogonal zu der Längsachse ausgerichtet ist, ergibt sich umgekehrt in diesem Spezialfall, dass die Tangente orthogonal oder in einem Winkel kleiner 30° zu der Längsachse des Zahnimplantats ausgerichtet ist.

Die o.g. Art der Ausgestaltung der Schnittstelle ermöglicht, wie bereits erwähnt, eine eindeutige Positionierung der Suprakonstruktion gegenüber dem Zahnimplantat. Ferner ermöglicht sie eine stabile und dichte direkte Verbindung zwischen der Suprakonstruktion und dem Zahnimplantat. Darüber hinaus ist die Schnittstelle sehr einfach und kostengünstig herstellbar, da sie sich auf einer Fräsmaschine ohne größere Probleme automatisiert herstellen lässt. Die beschriebene Form der Schnittstelle genügt allen mechanischen Anforderungen an eine unmittelbare Verbindung von Titan (typischer Werkstoff, aus dem das Zahnimplantat hergestellt ist) und Keramik (typischer Werkstoff, aus dem die Suprakonstruktion hergestellt ist). Die beschriebene Form der Schnittstelle genügt auch den Anforderungen an eine unmittelbare Verbindung von Titan mit Titan, für einen Fall, in dem sowohl die Suprakonstruktion als auch das Zahnimplantat aus Titan hergestellt sind. Zudem eignet sich die Schnittstelle für den eingangs genannten Herstellungsprozess, bei dem die Suprakonstruktion anhand eines CAD-Modells automatisiert gefertigt wird (beispielsweise durch spanabhebende oder additive Fertigungsverfahren).

Mit dem Zahnimplantat ist somit eine neuartige direkte Verbindung zwischen Zahnimplantat und Suprakonstruktion (ohne Abutment) möglich.

Ein beispielhaftes Verfahren zur Herstellung einer Zahnprothese weist folgende Schritte auf::
- Herstellen eines Zahnimplantats mit einer sich entlang einer Längsachse des Zahnimplantats erstreckenden Öffnung, einem in der Öffnung angeordneten Innengewinde und mit einer ersten Schnittstelle, welche an einem stirnseitigen Ende des Zahnimplantats angeordnet ist,
- Herstellen einer Suprakonstruktion mit einem Durchgangsloch und einer zweiten Schnittstelle, welche an einem stirnseitigen Ende der Suprakonstruktion angeordnet ist und zu der ersten Schnittstelle passend ausgestaltet ist;
- Bereitstellen eines Befestigungsmittels mit einem zu dem Innengewinde passenden Außengewinde;
- Befestigen der Suprakonstruktion an dem Zahnimplantat mit Hilfe des Befestigungsmittels derart, dass die erste Schnittstelle die zweite Schnittstelle kontaktiert.

Die Suprakonstruktion wird an dem Zahnimplantat also ohne ein dazwischen angeordnetes Abutment befestigt. Vorzugsweise werden die erste und die zweite Schnittstelle anhand eines CAD-Datensatzes durch Fräsen, besonders bevorzugt mit Hilfe eines Kugelfräsers, automatisiert hergestellt. Dies vereinfacht die Herstellung der Zahnprothese ungemein und erhöht gleichzeitig die Gestaltungsfreiheit, da sich jede Zahnprothese ohne erhöhten Kostenaufwand individuell auf jeden Patienten anpassen lässt. Ein extra Abutment wird nicht benötigt. Dennoch ist die Verbindung zwischen der Suprakonstruktion und dem Zahnimplantat als lösbare Verbindung ausgestaltet.

Nachfolgend werden diverse optionale Ausgestaltungen erläutert, welche sich in gleicher Weise sowohl auf das Zahnimplantat als auch auf das zuvor erwähnte Verfahren beziehen können.

Gemäß einer Ausgestaltung ist die Schnittstelle des Zahnimplantats zur Bildung einer Verdrehsicherung nicht drehsymmetrisch in Bezug auf die Längsachse ausgestaltet.

Unter einem drehsymmetrischen Körper wird jeder Körper verstanden, der sich nach einer Drehung in einer Ebene um einen Winkel kleiner als 360° wieder deckungsgleich auf sich selbst abbildet. Ein Würfel (mit quadratischer Grundfläche) besitzt also eine 90°-Drehsymmetrie um seine Hauptachse; ein Quader mit rechteckiger Querschnittsfläche besitzt eine 180°-Drehsymmetrie um seine Hauptachse; und ein Prisma mit einer Querschnittsfläche in Form eines gleichseitigen Dreiecks besitzt eine 60°-Drehsymmetrie. Da eine solche Drehsymmetrie für die Schnittstelle des Zahnimplantats nicht vorhanden ist, bildet sich die Schnittstelle erst bei einer Drehung um 360° um die Längsachse wieder auf sich selbst ab, jedoch nicht bei einer Drehung um die Längsachse um irgendeinen anderen Winkel < 360°.

Gemäß einer Ausgestaltung ist die Schnittstelle spiegelsymmetrisch zu einer Längsschnittebene, in der die Längsachse liegt. Besonders bevorzugt ist die Schnittstelle spiegelsymmetrisch zu einer einzigen Längsschnittebene, in der die Längsachse liegt. Gleichzeitig ist die Schnittstelle, wie bereits erwähnt, jedoch vorzugsweise nicht-drehsymmetrisch in Bezug auf die Längsachse.

Zur Herstellung der nicht-drehsymmetrischen Ausgestaltung der Schnittstelle gibt es mehrere Möglichkeiten. Gemäß einer ersten Ausgestaltung ist die konvexe Wölbung nicht-drehsymmetrisch in Bezug auf die Längsachse ausgestaltet. Gemäß einer anderen Ausgestaltung ist zwar die konvexe Wölbung drehsymmetrisch in Bezug auf die Längsachse, jedoch ein anderer Teil der Schnittstelle nicht-drehsymmetrisch in Bezug auf die Längsachse ausgestaltet, so dass die Schnittstelle gesamthaft betrachtet wiederum nicht-drehsymmetrisch in Bezug auf die Längsachse ist. In einer weiteren Ausgestaltung sind sowohl die konvexe Wölbung als auch ein weiterer Teil der Schnittstelle nicht-drehsymmetrisch in Bezug auf die Längsachse ausgestaltet.

In einer Ausgestaltung liegen zumindest ein Teil des radial äußeren Randes der Wölbung und zumindest ein Teil eines radial inneren Randes der Wölbung jeweils auf einer Kreislinie. Zumindest ein Teil des radial äußeren Randes der Wölbung liegt demnach auf einer ersten Kreislinie mit einem ersten Radius und ein Teil des radial inneren Randes der Wölbung liegt auf einer zweiten Kreislinie mit einem zweiten Radius, der kleiner als der erste Radius ist. Zumindest ein Teil der Grundfläche der Wölbung liegt also auf einer Kreisringfläche bzw. auf einem Abschnitt einer Kreisringfläche. Anders ausgedrückt, hat die konvexe Wölbung in einer Draufsicht entlang der Längsachse betrachtet die Form eines Kreisrings oder eines Teils eines Kreisrings.

Gemäß einer weiteren bevorzugten Ausgestaltung des Zahnimplantats ist die Wölbung in einem Längsschnitt des Zahnimplantats betrachtet ein Kreissektor. Der Querschnitt der Wölbung hat also mit anderen Worten die Form eines Kreissektors bzw. Kreisabschnittes, wobei der Querschnitt in einer Ebene liegt, welche durch die Längsachse und die orthogonal dazu verlaufende Radialrichtung des Zahnimplantats aufgespannt wird.

Besonders bevorzugt beträgt der Mittelpunktswinkel des Kreissektors 90°. Die Wölbung hat in dem genannten Querschnitt also die Form eines Viertelkreises.

Da zur Herstellung der Wölbung vorzugsweise ein Kugelfräser verwendet wird, welcher für die Titanbearbeitung typischerweise einen Durchmesser von 1 mm hat, hat der Kreissektor, unabhängig davon, ob der Mittelpunktswinkel 90° beträgt, kleiner oder größer ist, vorzugsweise einen Radius von 0,5 mm. Ein solcher Radius von 0,5 mm ist mit den typischerweise verwendeten Kugelfräsern am einfachsten herstellbar.

In einer weiteren Ausgestaltung des Zahnimplantats bildet die Wölbung einen Übergang zwischen dem kreisringförmigen Abschnitt der Auflagefläche und der Öffnung, wobei die Wölbung an die Öffnung unmittelbar angrenzt. Ebenso ist es bevorzugt, dass die Wölbung an dem kreisringförmigen Abschnitt der Auflagefläche unmittelbar angrenzt.

Gemäß dieser bevorzugten Ausgestaltung grenzt der kreisringförmige Abschnitt der Auflagefläche also unmittelbar an den radial äußeren Rand der Wölbung an und die Öffnung grenzt unmittelbar an den radial inneren Rand der Wölbung an. Unter dem "radial äußeren" Rand der Wölbung wird der Teil der Wölbung verstanden, welcher im Vergleich zu den übrigen Teilen der Wölbung den größten radialen Abstand von der Längsachse aufweist. Dementsprechend wird unter dem "radial inneren" Rand der Wölbung der Teil der Wölbung verstanden, welcher im Vergleich zu den übrigen Teilen der Wölbung den kleinsten radialen Abstand von der Längsachse aufweist.

Gemäß einer weiteren Ausgestaltung des Zahnimplantats erstreckt sich die Wölbung über einen Winkelbereich von mindestens 270° um die Längsachse herum. Dies ermöglicht die Aufnahme von Radialkräften durch die Wölbung über einen sehr großen Winkelbereich und stabilisiert somit die mechanische Verbindung zwischen Zahnimplantat und Suprakonstruktion.

Gemäß einer weiteren Ausgestaltung des Zahnimplantats steht die Wölbung an dem stirnseitigen Ende gegenüber der Auflagefläche, vorzugsweise gegenüber dem kreisringförmigen Abschnitt der Auflagefläche, nach oben hin ab. Die Wölbung bildet also eine nach oben hin hervorstehende Struktur.

In der zuletzt genannten Ausgestaltung ist es bevorzugt, dass die Tangente an den radial äußeren Rand der Wölbung, der dem kreisringförmigen Abschnitt der Auflagefläche zugewandt ist, in einem Winkel größer 60° zu dem kreisringförmigen Abschnitt der Auflagefläche ausgerichtet ist. Besonders bevorzugt ist die Tangente dabei orthogonal zu dem kreisringförmigen Abschnitt der Auflagefläche ausgerichtet.

Gemäß einer weiteren Ausgestaltung des Zahnimplantats weist die Wölbung als Verdrehsicherung an einem Segment einen Einschnitt auf. Dieser Einschnitt kann auch als Aussparung bezeichnet werden. Der Einschnitt bzw. die Aussparung tragen zu der nicht-drehsymmetrischen Ausgestaltung der Schnittstelle bei, wobei in diesem Fall die Wölbung selbst nicht-drehsymmetrisch ausgestaltet ist und damit die Verdrehsicherung bildet.

Gemäß einer weiteren Ausgestaltung des Zahnimplantats ist zumindest ein Teil der konvexen Wölbung innerhalb der zentralen Öffnung angeordnet. In dieser Ausgestaltung ist es bevorzugt, dass die konvexe Wölbung sogar vollständig innerhalb der zentralen Öffnung angeordnet ist.

Weiterhin ist es in der zuletzt genannten Ausgestaltung bevorzugt, dass die Tangente an dem radial äußeren Rand der Wölbung, der dem kreisringförmigen Abschnitt der Auflagefläche zugewandt ist, parallel zu dem kreisringförmigen Abschnitt der Auflagefläche ausgerichtet ist. Besonders bevorzugt handelt es sich dabei nicht nur um eine parallele, sondern um eine fluchtende Ausrichtung. Demnach geht die Wölbung in dieser Ausgestaltung vorzugsweise tangential in den kreisringförmigen Abschnitt der Auflagefläche über.

Bei der Ausgestaltung, bei der die Wölbung innerhalb der Öffnung angeordnet ist, ist es bevorzugt, dass sich die Wölbung über einen Winkelbereich von 360° um die Längsachse herum erstreckt. Die Wölbung ist in dieser Ausgestaltung also vorzugsweise drehsymmetrisch ausgestaltet.

Zur Bildung der geforderten Verdrehsicherung kann die Schnittstelle einen Verdrehsicherungsabschnitt aufweisen, der in Bezug auf die Längsachse nicht-drehsymmetrisch ist und innerhalb der Öffnung zwischen dem Gewinde und der Wölbung angeordnet ist. Vorzugsweise weist dieser Verdrehsicherungsabschnitt zwei Flächen auf, die zueinander entlang der Längsachse versetzt angeordnet sind. Diese beiden Flächen sind vorzugsweise orthogonal zu der Längsachse ausgerichtet. In einer beispielhaften Ausgestaltung sind die beiden Flächen jeweils teilkreisringförmig.

Die vorliegende Erfindung betrifft eine Suprakonstruktion, mit einem sich entlang einer Längsachse der Suprakonstruktion erstreckenden Durchgangsloch und einer an einem stirnseitigen Ende der Suprakonstruktion angeordneten Schnittstelle zur Befestigung der Suprakonstruktion an einem Zahnimplantat, wobei die Schnittstelle eine sich über einen Winkelbereich von mindestens 90° um die Längsachse herum erstreckende konkave Wölbung und eine im Vergleich zu der konkaven Wölbung radial weiter außen angeordnete Auflagefläche aufweist, wobei die Auflagefläche zumindest einen kreisringförmigen Abschnitt hat, der quer zu der Längsachse ausgerichtet ist, und wobei eine Tangente an einen radial äußeren Rand der konkaven Wölbung, welcher dem kreisringförmigen Abschnitt der Auflagefläche zugewandt ist, parallel zu dem kreisringförmigen Abschnitt der Auflagefläche ausgerichtet ist.

Da die Suprakonstruktion das Gegenstück zu dem Zahnimplantat bildet, ist deren Schnittstelle (zweite Schnittstelle) als entsprechendes Gegenstück zu der Schnittstelle (erste Schnittstelle) des Zahnimplantats geformt.

Ausführungsbeispiele der Erfindung sind in den Zeichnungen dargestellt und werden in der nachfolgenden Beschreibung näher erläutert. Es zeigen:
- Fig. 1: eine perspektivische Ansicht eines ersten Ausführungsbeispiels des Zahnimplantats;
- Fig. 2: eine Draufsicht von oben auf das in Fig. 1 gezeigte erste Ausführungsbeispiel des Zahnimplantats;
- Fig. 3: eine Längsschnittansicht des in Fig. 1 gezeigten ersten Ausführungsbeispiels des Zahnimplantats;
- Fig. 4: eine perspektivische Ansicht eines zweiten Ausführungsbeispiels des Zahnimplantats;
- Fig. 5: eine Draufsicht von oben auf das in Fig. 4 gezeigte zweite Ausführungsbeispiel des Zahnimplantats;
- Fig. 6: eine Längsschnittansicht des in Fig. 4 gezeigten zweiten Ausführungsbeispiels des Zahnimplantats;
- Fig. 7: eine perspektivische Detailansicht einer Unterseite einer zu dem in Fig. 1-3 gezeigten Zahnimplantat passenden Suprakonstruktion;
- Fig. 8: eine perspektivische Detailansicht einer Unterseite einer zu dem in Fig. 4-6 gezeigten Zahnimplantat passenden Suprakonstruktion gemäß der beanspruchten Erfindung; und
- Fig. 9: eine Schnittansicht einer Zahnprothese, welche das Zahnimplantat aufweist.

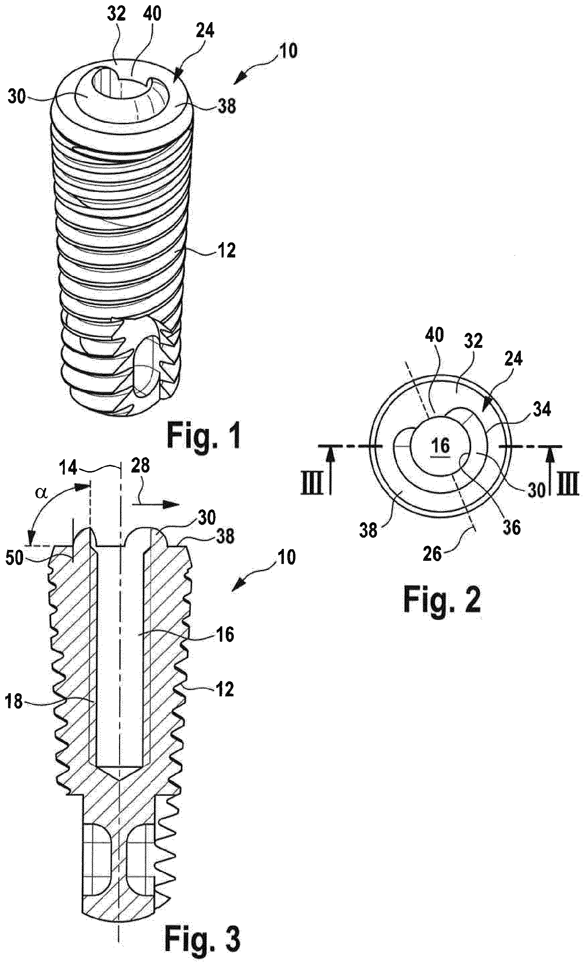

Fig. 1-3 zeigen ein erstes Ausführungsbeispiel des Zahnimplantats in verschiedenen Ansichten. Das Zahnimplantat ist darin in seiner Gesamtheit mit der Bezugsziffer 10 bezeichnet.

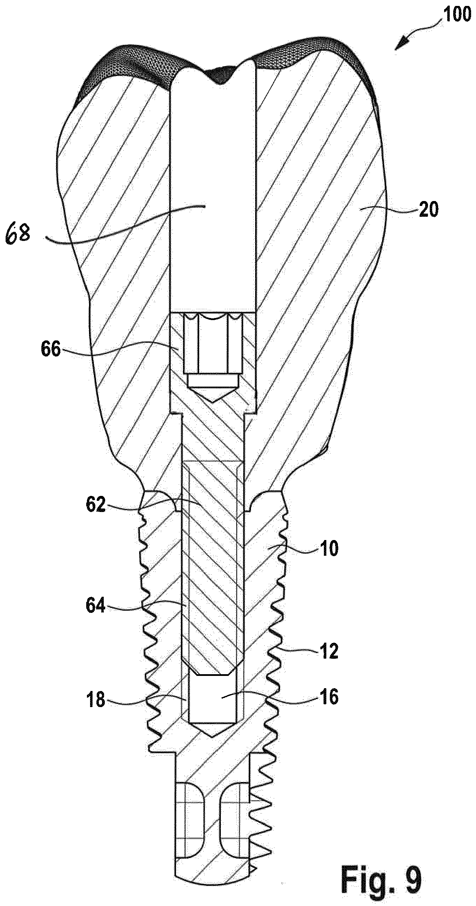

Das Zahnimplantat 10 ist typischerweise aus Titan oder Zirkonoxid gefertigt. Es weist auf seiner Außenseite ein Außengewinde 12 auf, mithilfe dessen das Zahnimplantat 10 in einen Kieferknochen eines Patienten eingeschraubt werden kann. Das Zahnimplantat 10 erstreckt sich im Wesentlichen entlang einer Längsachse 14, welche auch als Mittelachse bezeichnet werden kann. In seinem Inneren weist das Zahnimplantat 10 eine Öffnung 16 auf, welche sich entlang der Längsachse 14 erstreckt. Vorzugsweise ist zumindest ein Teil dieser Öffnung 16 als Bohrung, besonders bevorzugt als Sacklochbohrung ausgestaltet. In der Öffnung 16 ist ein Innengewinde 18 angeordnet. Dieses Innengewinde dient der Befestigung einer Suprakonstruktion 20 (künstliche Zahnkrone) an dem Zahnimplantat 10. Zur Befestigung der Suprakonstruktion an dem Zahnimplantat 10 wird vorzugsweise eine Schraube 22 verwendet, welche in das Innengewinde 18 eingreift (s. Fig. 9).

An dem stirnseitigen oberen Ende weist das Zahnimplantat 10 eine Schnittstelle 24 (erste Schnittstelle 24) auf, welche in Fig. 2 in einer Draufsicht von oben vergrößert dargestellt ist. Diese Schnittstelle 24 dient der Befestigung der Suprakonstruktion 20 an dem Zahnimplantat 10. Die Schnittstelle 24 bildet sozusagen die Kontaktfläche, mit der das Zahnimplantat 10 die Suprakonstruktion 20 in montiertem Zustand kontaktiert.

Die Besonderheit der Schnittstelle 24 ist darin zu sehen, dass diese aufgrund ihrer Form und Konstruktion eine direkte Anbringung der Suprakonstruktion 20 an dem Zahnimplantat 10 ermöglicht (ohne die Verwendung eines dazwischen angeordneten Abutments). In dem in Fig. 1-3 gezeigten Ausführungsbeispiel ist die Schnittstelle 24 zur Bildung einer Verdrehsicherung nicht-drehsymmetrisch in Bezug auf die Längsachse 14 des Zahnimplantats 10 ausgestaltet. Sie ist dagegen spielsymmetrisch in Bezug auf eine Längsschnittebene, welche in Fig. 2 mit einer gestrichelten Linie 26 angedeutet ist. Diese Längsschnittebene 26 wird durch die Längsachse 14 und die dazu orthogonal verlaufende Radialrichtung 28 aufgespannt. Sie teilt das Zahnimplantat 10 in zwei gleichgroße Hälften.

Die Schnittstelle 24 weist eine Wölbung 30 sowie eine die Wölbung 30 umgebende Auflagefläche 32 auf. Die Wölbung 30 dient im Wesentlichen der Aufnahme von Kräften in Radialrichtung 28. Die Auflagefläche 32 dient dagegen als axiale Auflage, welche im Wesentlichen Kräfte in Längsrichtung, also entlang der Längsachse 14, aufnimmt. Die Suprakonstruktion 20 stützt sich in montiertem Zustand sowohl an der Wölbung 30 als auch an der Auflagefläche 32 ab.

Die Wölbung 30 ist konvex, also nach außen gewölbt, ausgestaltet. Die Wölbung 30 ist abgerundet, also nicht eckig. Die Wölbung 30 erstreckt sich über einen Winkelbereich von mindestens 90° um die Längsachse 14 herum. In den in Fig. 1-3 gezeigten Ausführungsbeispiel ist dieser Winkelbereich sogar größer als 200°.

In diesem Ausführungsbeispiel ist die Wölbung 30 nicht-drehsymmetrisch ausgestaltet. Im Querschnitt betrachtet (s. Fig. 3) ist die Wölbung 30 vorzugsweise als Kreissektor mit einem Mittelpunktswinkel α von 90° ausgestaltet. Es versteht sich jedoch, dass auch andere Mittelpunktswinkel α möglich sind. Ebenso muss die Wölbung 30 im Querschnitt nicht zwangsläufig kreisrund sein. Sie kann auch elliptisch geformt oder als Freiformfläche ausgestaltet sein.

Der äußere Rand 34 und der innere Rand 36 der Wölbung 30 liegen vorzugsweise auf einer Kreislinie. In der in Fig. 2 gezeigten Draufsicht ist die Wölbung 30 somit zumindest abschnittsweise kreisringförmig. Die Wölbung 30 bildet demnach einen Teil der Oberfläche eines Torus.

Vorzugsweise grenzt die Wölbung 30 unmittelbar an die Öffnung 16 an. In dem in Fig. 1-3 gezeigten Ausführungsbeispiel bildet der innere Rand 36 der Wölbung 30 den oberen Rand der Öffnung 16. Der äußere Rand 34 der Wölbung 30 grenzt vorzugsweise unmittelbar an einen kreisringförmigen Abschnitt 38 der Auflagefläche 32 an. Dieser kreisringförmige Abschnitt 38 verläuft quer, vorzugsweise unter einem Winkel größer 60°, besonders bevorzugt orthogonal zu der Längsachse 14 des Zahnimplantats 10. Die Wölbung 30 steht gegenüber diesem kreisringförmigen Abschnitt 38 nach oben hin ab.

Wie ferner aus Fig. 1 und 2 ersichtlich ist, weist die Wölbung 30 an einem Teil ihres Umfangs einen Einschnitt 40 auf. An diesem Einschnitt 40 ist die Wölbung 30 unterbrochen. Der Einschnitt 40 dient als Verdrehsicherung zum Schutz einer Verdrehung der Suprakonstruktion 20 relativ zu dem Zahnimplantat 10.

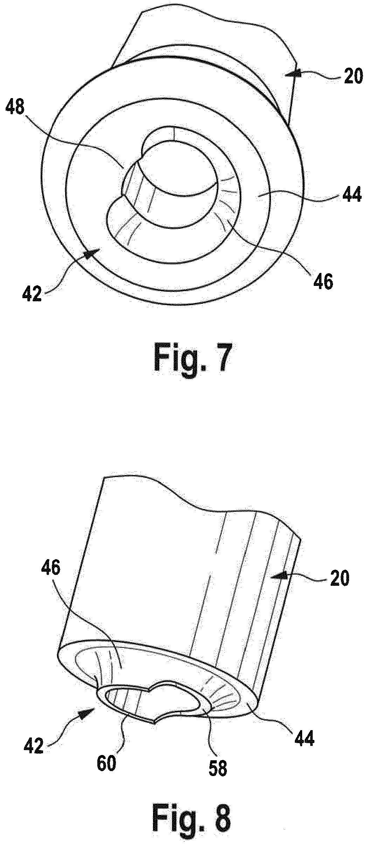

Fig. 7 zeigt die als Gegenstück an der Unterseite der Suprakonstruktion 20 geformte Schnittstelle 42, welche vorliegend als zweite Schnittstelle bezeichnet wird. Die Schnittstelle 42 weist ebenfalls eine Auflagefläche 44 mit zumindest einem kreisringförmigen Abschnitt auf. Als Gegenstück zu der konvexen Wölbung 30 weist die Schnittstelle 42 eine konkave Vertiefung 46 auf. Da diese konkave Vertiefung 46 durch einen Steg 48 unterbrochen ist, lassen sich Zahnimplantat 10 und Suprakonstruktion 20 nur in einer einzigen definierten Position relativ zueinander anordnen. Die Auflageflächen 32, 44 liegen dabei plan aneinander an und die konvexe Wölbung 30 greift in die konkave Vertiefung 46 ein.

Zur Bildung einer möglichst stabilen Verbindung zwischen dem Zahnimplantat 10 und der Suprakonstruktion 20 ist eine an den äußeren Rand 34 der Wölbung anliegende Tangente 50 vorzugsweise orthogonal zu der Auflagefläche 32 bzw. dem kreisringförmigen Abschnitt 38 ausgerichtet. Der Winkel dieser Tangente 50 zu dem kreisringförmigen Abschnitt 38 der Auflagefläche 32 beträgt in diesem Ausführungsbeispiel des Zahnimplantats 10 vorzugsweise mindestens 60°. Dies ist nicht nur aufgrund der Stabilität, sondern auch aus Gründen der einfacheren Herstellbarkeit von Vorteil.

Bei Vergleich der Fig. 2 und 7 sei noch auf einen weiteren Vorteil der Schnittstellen 24, 42 hingewiesen. Durch einfache Modifikation der Schnittstelle 44 ist es möglich, die Verdrehsicherung aufzuheben. Indem beispielsweise der Steg 48 weggelassen wird und die konkave Vertiefung 46 ringsherum ausgeführt ist, ist die zur eindeutigen Positionierung zwischen Suprakonstruktion 20 und Zahnimplantat 10 notwendige Verdrehsicherung aufgehoben. Dies kann beispielsweise dann von Vorteil sein, wenn eine solche eindeutige Positionierung nicht gefordert ist. Dies ist beispielsweise im Fall einer Montage einer Brücke als Suprakonstruktion 20 auf dem Zahnimplantat 10 von Vorteil.

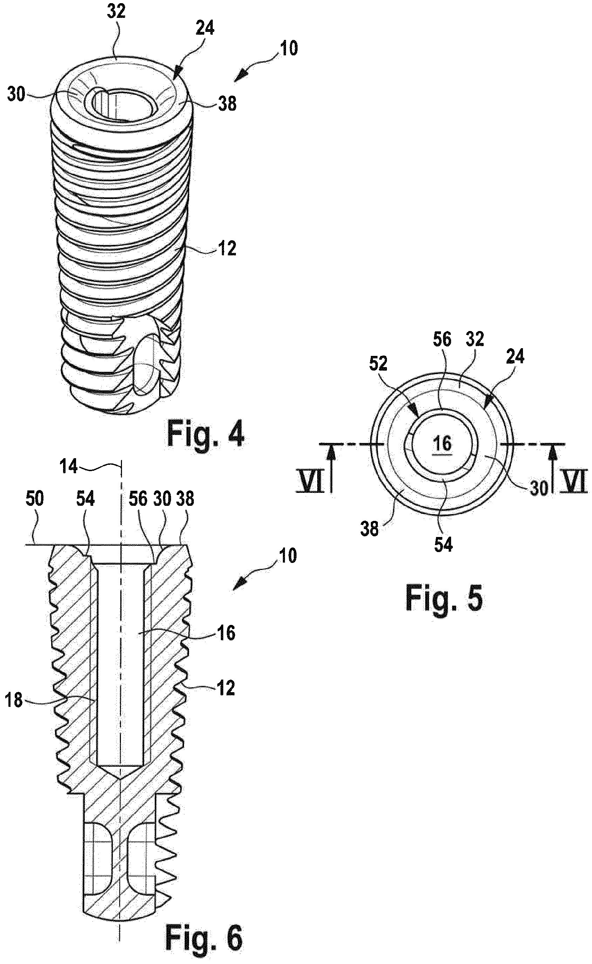

Fig. 4-6 zeigen ein zweites Ausführungsbeispiel des Zahnimplantats 10. Der Einfachheit halber wird nachfolgend lediglich auf die Unterschiede zu dem in Fig. 1-3 gezeigten ersten Ausführungsbeispiel eingegangen.

Die Auflagefläche 32 ist in dem in Fig. 4-6 gezeigten zweiten Ausführungsbeispiel durchgehend kreisringförmig ausgestaltet. Der kreisringförmige Abschnitt 38 bildet somit die gesamte Auflagefläche 32. Die konvexe Wölbung 30 ist zumindest teilweise innerhalb der Öffnung 16 angeordnet. Sie bildet das obere Ende der Öffnung 16.

Ein weiterer wesentlicher Unterschied zu dem ersten Ausführungsbeispiel besteht darin, dass die Tangente 50 parallel zu dem kreisringförmigen Abschnitt 38 der Auflagefläche 32 verläuft. Genauer gesagt, geht der kreisringförmige Abschnitt 38 der Auflagefläche 32 tangential in die konvexe Wölbung 30 über (s. Fig. 6). Die konvexe Wölbung 30 umgibt die Längsachse 14 in diesem Ausführungsbeispiel vollständig. Sie erstreckt sich also über einen Winkelbereich von 360° um die Längsachse 14. Demnach ist die konvexe Wölbung 30 gemäß diesem Ausführungsbeispiel drehsymmetrisch. Die Schnittstelle 24 ist in ihrer Gesamtheit nichtsdestotrotz nicht-drehsymmetrisch ausgestaltet. Sie weist neben der Auflagefläche 32 und der Wölbung 30 einen Verdrehsicherungsabschnitt 52 auf. Dieser Verdrehsicherungsabschnitt 52 ist in der Öffnung 16 räumlich betrachtet zwischen der konvexen Wölbung 30 und dem Innengewinde 18 angeordnet.

Der Verdrehsicherungsabschnitt 52 weist in dem in Fig. 4-6 gezeigten Ausführungsbeispiel zwei teilkreisringförmige Flächen 54, 56 auf, die zueinander entlang der Längsachse 14 versetzt angeordnet sind. Es versteht sich jedoch, dass diese beiden Flächen 54, 56 nicht zwangsläufig teilkreisringförmig sein müssen. Vorzugsweise sind die beiden Flächen 54, 56 orthogonal zu der Längsachse ausgerichtet.

Fig. 8 zeigt die gemäß dem zweiten Ausführungsbeispiel als Gegenstück zu der Schnittstelle 24 dienende Schnittstelle 42, welche an der Unterseite der Suprakonstruktion 20 angeordnet ist. Die Auflagefläche 44 ist wiederum kreisringförmig ausgestaltet. Der konvexen Wölbung 30 entsprechend ist an der Unterseite der Suprakonstruktion 20 eine konkave Wölbung 46 vorgesehen, welche in diesem Fall gegenüber der Auflagefläche 44 nach unten hin absteht. Als Gegenstücke zu den Flächen 54, 56 sind im Anschluss an die konkave Wölbung 46 stirnseitig angeordnete Planflächen 58, 60 vorgesehen. Diese Planflächen 58, 60 sind hier ebenfalls als teilkreisförmige Flächen ausgestaltet sind und in Bezug auf die Längsachse 14 zueinander versetzt angeordnet sind.

In montiertem Zustand liegt die Auflagefläche 32 des Zahnimplantats10 an der Auflagefläche 44 der Suprakonstruktion 20 an, die konvexe Wölbung 30 an der konkaven Wölbung 46 an und die Flächen 54, 56 an den Flächen 58, 60 an. Auch hier ermöglichen die Schnittstellen 24, 42 wiederum nur eine einzige definierte Ausrichtung des Zahnimplantats 10 und der Suprakonstruktion 20 relativ zueinander.

Fig. 9 zeigt ein Ausführungsbeispiel einer Zahnprothese 100, in der das Zahnimplantat 10 zum Einsatz kommt. Die erste Schnittstelle 24 des Zahnimplantats 10 und die zweite Schnittstelle 42 der Suprakonstruktion 20 werden vorzugsweise anhand eines CAD-Datensatzes durch Fräsen, besonders bevorzugt mit Hilfe eines Kugelfräsers, automatisiert hergestellt. Ein extra Abutment wird nicht benötigt. Dennoch ist die Verbindung zwischen der Suprakonstruktion 20 und dem Zahnimplantat 10 als lösbare Verbindung ausgestaltet. Die Suprakonstruktion 20 ist mithilfe einer Befestigungsschraube 62 an dem Zahnimplantat 10 befestigt. Die Befestigungsschraube 62 wird durch ein in der Suprakonstruktion 20 befindliches Durchgangsloch 68 hindurch in das Zahnimplantat 10 eingesetzt. Dieses Durchgangsloch 68 wird nach dem Verbinden der Suprakonstruktion 20 mit dem Zahnimplantat 10 wieder geschlossen. Die Befestigungsschraube 62 weist an ihrem unteren Rand ein Außengewinde 64 auf, welches in das im Zahnimplantat 10 angeordnete Innengewinde 18 eingreift.

## Patentansprüche

1. Suprakonstruktion (20), aufweisend:
- ein sich entlang einer Längsachse der Suprakonstruktion (20) erstreckendes Durchgangsloch (68); und
- eine an einem stirnseitigen Ende der Suprakonstruktion (20) angeordnete Schnittstelle (42) zur Befestigung der Suprakonstruktion (20) an einem Zahnimplantat (10);
wobei die Schnittstelle (42) eine sich über einen Winkelbereich von mindestens 90° um die Längsachse herum erstreckende Vertiefung konkave Wölbung (46) und eine im Vergleich zu der konkaven Wölbung (46) radial weiter außen angeordnete Auflagefläche (44) aufweist, wobei die Auflagefläche (44) zumindest einen kreisringförmigen Abschnitt hat, der quer zu der Längsachse ausgerichtet ist, und
**dadurch gekennzeichnet, dass** in einem Längsschnitt entlang der Längsachse der Suprakonstruktion (20) eine Tangente an einen radial äußeren Rand der konkaven Wölbung (46), welcher dem kreisringförmigen Abschnitt der Auflagefläche (44) zugewandt ist, parallel zu dem kreisringförmigen Abschnitt der Auflagefläche (44) ausgerichtet ist.

2. Suprakonstruktion nach Anspruch 1, wobei die Schnittstelle (42) zur Bildung einer Verdrehsicherung nicht drehsymmetrisch in Bezug auf die Längsachse ist.

3. Suprakonstruktion nach Anspruch 1 oder 2, wobei die Schnittstelle (42) spiegelsymmetrisch zu einer Längsschnittebene ist, in der die Längsachse liegt.

4. Suprakonstruktion nach einem der Ansprüche 1-3, wobei der kreisringförmige Abschnitt rund herum einen konstanten Winkel größer 60° in Bezug auf die Längsachse hat.

5. Suprakonstruktion nach einem der Ansprüche 1-4, wobei der kreisringförmige Abschnitt orthogonal zu der Längsachse ausgerichtet ist.

6. Suprakonstruktion nach einem der Ansprüche 1-5, wobei zumindest ein Teil des radial äußeren Randes der Wölbung (46) und zumindest ein Teil eines radial inneren Randes der Wölbung (46) jeweils auf einer Kreislinie liegen.

7. Suprakonstruktion nach einem der Ansprüche 1-6, wobei die Wölbung (46) in dem Längsschnitt der Suprakonstruktion (20) betrachtet ein Kreissektor ist.

8. Suprakonstruktion nach Anspruch 7, wobei der Mittelpunktswinkel (a) des Kreissektors 90° beträgt.

9. Suprakonstruktion nach einem der Ansprüche 1-8, wobei die Wölbung (46) einen Übergang zwischen dem kreisringförmigen Abschnitt der Auflagefläche (44) und dem Durchgangsloch (68) bildet und an das Durchgangsloch (68) unmittelbar angrenzt.

10. Suprakonstruktion nach Anspruch 9, wobei die Wölbung (46) an den kreisringförmigen Abschnitt der Auflagefläche (44) unmittelbar angrenzt.

11. Suprakonstruktion nach einem der Ansprüche 1-10, wobei sich die Wölbung (46) über einen Winkelbereich von mindestens 270° um die Längsachse herum erstreckt.

12. Suprakonstruktion nach einem der Ansprüche 1-11, wobei die Wölbung (46) als Verdrehsicherung durch einen Steg (48) unterbrochen ist.

13. Suprakonstruktion nach Anspruch 1, wobei die Wölbung (46) tangential in den kreisringförmigen Abschnitt der Auflagefläche (44) übergeht.

14. Suprakonstruktion nach Anspruch 13, wobei sich die Wölbung (46) über einen Winkelbereich von 360° um die Längsachse herum erstreckt.

15. Zahnprothese (100), aufweisend:
- ein Zahnimplantat (10);
- eine Suprakonstruktion (20) gemäß einem der Ansprüche 1-14; und
- ein Befestigungsmittel (62) zur Befestigung der Suprakonstruktion (20) an dem Zahnimplantat (10).

## Claims

1. Superstructure (20), comprising:
- a through-hole (68) extending along a longitudinal axis of the superstructure (20); and
- an interface (42) arranged at a front end of the superstructure (20) for fastening the superstructure (20) to a dental implant (10);
wherein the interface (42) comprises a concave curvature (46) extending around the longitudinal axis over an angular range of at least 90°, and a support surface (44) arranged radially outwardly relative to the concave curvature (46), wherein the support surface (44) has at least one annular portion that is oriented transversely to the longitudinal axis, and
**characterized in that**, in a longitudinal section along the longitudinal axis of the superstructure (20), a tangent to a radially outer edge of the concave curvature (46) that faces the annular portion of the support surface (44) is oriented parallel to the annular portion of the support surface (44).

2. Superstructure according to claim 1, wherein the interface (42) is not rotationally symmetrical with respect to the longitudinal axis in order to form an anti-rotation device.

3. Superstructure according to claim 1 or 2, wherein the interface (42) is mirror-symmetrical to a longitudinal sectional plane in which the longitudinal axis lies.

4. Superstructure according to one of claims 1-3, wherein the annular portion has all around a constant angle greater than 60° with respect to the longitudinal axis.

5. Superstructure according to one of claims 1-4, wherein the annular portion is oriented orthogonally to the longitudinal axis.

6. Superstructure according to one of claims 1-5, wherein at least a part of the radially outer edge of the curvature (46) and at least a part of a radially inner edge of the curvature (46) each lie on a circular line.

7. Superstructure according to one of claims 1-6, wherein the curvature (46) in the longitudinal section of the superstructure (20) is a circular sector.

8. Superstructure according to claim 7, wherein the central angle (a) of the circular sector is 90°.

9. Superstructure according to one of claims 1-8, wherein the curvature (46) forms a transition between the annular portion of the support surface (44) and the through-hole (68) and is directly adjacent to the through-hole (68).

10. Superstructure according to claim 9, wherein the curvature (46) is directly adjacent to the annular portion of the support surface (44).

11. Superstructure according to any of claims 1-10, wherein the curvature (46) extends over an angular range of at least 270° around the longitudinal axis.

12. Superstructure according to one of the claims 1-11, wherein the curvature (46) is interrupted by a bar (48) as anti-rotation device.

13. Superstructure according to claim 1, wherein the curvature (46) merges tangentially into the annular portion of the support surface (44).

14. Superstructure according to claim 13, wherein the curvature (46) extends over an angular range of 360° around the longitudinal axis.

15. Dental prosthesis (100), comprising:
- a dental implant (10);
- a superstructure (20) according to one of claims 1-14; and
- a fastening member (62) for fastening the superstructure (20) to the dental implant (10).

## Revendications

1. Superstructure (20), comprenant :
- un trou traversant (68) qui s'étend le long d'un axe longitudinal de la superstructure et
- une interface (42) qui est disposée à une extrémité frontale de la superstructure (20) et qui est destinée à fixer la superstructure (20) à un implant dentaire (10) ; l'interface (42) présentant une moulure arrondie convexe (46) qui s'étend sur une plage angulaire d'au moins 90° autour de l'axe longitudinal et une surface d'appui (44) disposée radialement plus vers l'extérieur par rapport à la moulure convexe (46), la surface d'appui (44) comportant au moins une portion annulaire qui est orientée transversalement à l'axe longitudinal,
**caractérisée en ce que** dans une portion longitudinale le long de l'axe longitudinal de la superstructure (20) une tangente est orientée, au niveau d'un bord radialement extérieur de la moulure convexe (46) qui est tourné vers la portion annulaire de la surface d'appui (44), parallèlement à la portion annulaire de la surface d'appui (44).

2. Superstructure selon la revendication 1, l'interface (42) n'étant pas à symétrie de rotation par rapport à l'axe longitudinal afin de former une sécurité anti-rotation.

3. Superstructure selon la revendication 1 ou 2, l'interface (42) étant à symétrie spéculaire par rapport à un plan de coupe longitudinal dans lequel se trouve l'axe longitudinal.

4. Superstructure selon l'une des revendications 1 à 3, la portion annulaire formant tout autour un angle constant supérieur à 60° par rapport à l'axe longitudinal.

5. Superstructure selon l'une des revendications 1 à 4, la portion annulaire étant orientée orthogonalement à l'axe longitudinal.

6. Superstructure selon l'une des revendications 1 à 5, au moins une partie du bord radialement extérieur de la moulure (46) et au moins une partie d'un bord radialement intérieur de la moulure (46) étant situées chacune sur une ligne circulaire.

7. Superstructure selon l'une des revendications 1 à 6, la moulure (46) étant un secteur de cercle dans une vue en coupe longitudinale de la superstructure (20).

8. Superstructure selon la revendication 7, l'angle central (α) du secteur de cercle étant de 90°.

9. Superstructure selon l'une des revendications 1 à 8, la moulure (46) formant une transition entre la portion annulaire de la surface d'appui (44) et le trou traversant (68) et étant directement adjacente au trou traversant (68).

10. Superstructure selon la revendication 9, la moulure (46) étant directement adjacente à la portion annulaire de la surface d'appui (44).

11. Superstructure selon l'une des revendications 1 à 10, la moulure (46) s'étendant sur une plage angulaire d'au moins 270° autour de l'axe longitudinal.

12. Superstructure selon l'une des revendications 1 à 11, la moulure (46) étant coupée par une nervure (48) servant de sécurité anti-rotation.

13. Superstructure selon la revendication 1, la moulure (46) se fondant tangentiellement dans la portion annulaire de la surface d'appui (44).

14. Superstructure selon la revendication 13, la moulure (46) s'étendant sur une plage angulaire de 360° autour de l'axe longitudinal.

15. Prothèse dentaire (100), comprenant :
- un implant dentaire (10) ;
- une superstructure (20) selon l'une des revendications 1 à 14 ; et
- un moyen de fixation (62) destiné à fixer la superstructure (20) à l'implant dentaire (10).
